# EUROPÄISCHE PATENTANMELDUNG

(11) **EP 0 551 540 A1**
(43) Veröffentlichungstag der Anmeldung: **21.07.1993**
(21) Anmeldenummer: 92100569.0
(22) Anmeldetag: 15.01.1992
(51) Int. Cl.: B23B 31/26, B23B 31/02, B23C 5/08

(54) **Schneidkopf sowie ein damit ausgestattetes Fräswerkzeug**

(71) Anmelder: Zettl, Otto, D-87463 Dietmannsried (DE)
(72) Erfinder: Zettl, Otto, D-87463 Dietmannsried (DE)
(74) Vertreter: Hübner, Hans-Joachim, Dipl.-Ing.

(57) **Zusammenfassung**

Eine Fräsplatte (5) hat ein Zentralloch (8), das von einem Befestigungsbolzen (4) durchsetzt wird, welcher an seinem Hinterende in einem Schaft (1) vorgespannt wird, sodaß die Fräsplatte (5) an der Stirnseite einer Schafthülse (2) festgeklemmt ist. Im Bereich der Fräsplatte (5) und des angrenzenden Vorderendes (9) der Schafthülse (2) weist der Befestigungsbolzen (4) einen Querschnitt in Form eines regelmäßigen konvexen Polygons auf. Das Sackloch (8) und der angrenzende Kanalabschnitt des Hülsenvorderendes (9) haben komplementäre Querschnitte, sodaß die Fräsplatte (5) über dem Befestigungsbolzen (4) drehfest an der Schafthülse (2) befestigt ist.

## Beschreibung

Die Erfindung betrifft einen Schneidkopf zur stirnseitigen Befestigung an einem Schaft eines Fräswerkzeuges, mit einem von einem Befestigungsbolzen zu durchsetzenden Zentralloch, der im Schaft verankerbar ist, wobei zur Drehsicherung des Schneidkopfes eine Formschlußverbindung zwischen diesem und dem Schaft besteht.

Ein Schneidkopf dieser Art ist aus der EP 84 607 B1 in Form einer Fräsplatte bekannt. Die Platte hat eine dreieckförmige Gestalt und ist in eine im wesentlichen komplementäre stirnseitige Ausnehmung des Schaftes formschlüssig eingesetzt. Die Schneidzähne der Fräsplatte stehen über die Außenkontur des Schaftvorderendes vor. Der Befestigungsbolzen besteht aus einer Schraube, mit der die Fräsplatte am Schaft festgeschraubt wird. Das Fräswerkzeug hat sich in der Praxis bewährt. Es wird insbesondere dann mit Vorteil eingesetzt, wenn der Fräsplattendurchmesser relativ klein ist. Die untere Grenze für das bekannte Fräswerkzeug liegt bei einem Schneiddurchmesser von etwa 7-8 mm. Bei geringer Herstellungsungenauigkeit hat sich als Nachteil herausgestellt, daß die Fräsplatte keinen flächigen Formschluß in der Schaftausnehmung mehr hat, vielmehr eine Relativdrehung im Betrieb stattfindet, derart, daß die dreieckförmige Frässcheibe nur mit drei Kanten an den ebenen Seitenflächen der Ausnehmung des Schaftes anliegt. Das Schneidmoment wird daher nicht gleichmäßig auf den Umfang des Schaftes übertragen, sondern es entstehen hochbelastete lokale Beanspruchungszonen, die zu einer Beschädigung des Schaftes führen können, wenn die Schneidleistung entsprechend hoch ist.

Die US-PS 2,852,962 zeigt einen Schneidkopf, der mit einem eingeschrumpften Befestigungsbolzen ausgestattet ist. Bei diesem Stand der Technik bildet der Befestigungsbolzen einen festen Bestandteil des Schneidkopfes. Mit dieser Konstruktion könnte theoretisch der Schneiddurchmesser weiter verringert werden, jedoch hat dieser Schneidkopf andere Nachteile. Der Befestigungsbolzen muß im Schaft festgeklemmt werden. Mit einer kraftschlüssigen Klemmverbindung können aber nicht so hohe Schneidkräfte übertragen werden wie mit einer Formschlußverbindung. Außerdem ist die Befestigung des Bolzens an der Fräsplatte über einen Schrumpfsitz problematisch, weil eine Erwärmung des Schneidkopfes während des Betriebes zu einem Lockern der Verbindung führen kann.

Aufgabe der Erfindung ist es, einen Schneidkopf, also z.B. eine Fräsplatte so auszubilden, daß eine sichere Befestigung am Schaft auch bei extrem kleinen Größen möglich ist und auch eine größere Einstechtiefe erreichbar ist.

Diese Aufgabe wird erfindungsgemäß dadurch gelöst, daß das Zentralloch insgesamt oder wenigstens in einem Axialbereich einen Querschnitt in Form eines regelmäßigen konvexen Polygons zur Formschlußverbindung mit dem im Kopf und/oder im kopfnahen Axialbereich einen komplementären regelmäßigen polygonalen Querschnitt aufweisenden Befestigungsbolzen hat, der den hohl ausgebildeten Schaft relativ undrehbar durchsetzt und an seinem Hinterende mit einer im Schaft angeordneten Zugvorrichtung kuppelbar ist.

Dank der Erfindung findet der Formschluß nicht zwischen der Außenkontur des Schneidkopfes und der Innenkontur des Schaftes statt, wie beim eingangs genannten Stand der Technik, sondern der Befestigungsbolzen kuppelt den Schneidkopf im Bereich des Zentralloches formschlüssig und kann gemäß einer Ausgestaltung der Erfindung in gleicher Weise selbst formschlüssig in den Schaft eingesteckt werden, sodaß die Drehsicherung des Schneidkopfes bezüglich des Schaftes durch den Befestigungsbolzen bewirkt wird. Die konvex gewölbten Flächen des regelmäßigen Polygons bringen den Vorteil, daß bei Herstellungsungenauigkeiten keine Kanten - beanspruchung auftritt. Wenn also zwischen dem Befestigungsbolzen und dem Zentralloch ein etwas zu hohes Spiel besteht, so verdreht sich der Schneidkopf auf dem Befestigungsbolzen, jedoch gewährleisten die konvexen Polygonflächen nach wie vor eine flächige Anlage. Die Außenkontur des Schneidkopfes kann beliebig gewählt werden, da diese für die Formschlußverbindung keine Bedeutung hat. Die neue Verbindung von Schneidkopf und Schaft über dem Befestigungsbolzen erlaubt eine erhebliche Herabsetzung des minimalen Schneiddurchmessen auf etwa 2-3 mm, sodaß das Fräswerkzeug auch in der Feinwerktechnik eingesetzt werden kann. Weiterhin wird die mögliche Einstechtiefe des erfindungsgemäßen Fräswerkzeugs maßgeblich erhöht. Da der Befestigungsbolzen an seinem Hinterende mittels einer im Schaft eingebauten Zugvorrichtung gespannt wird, bildet der Vorderteil des Schaftes mit dem Befestigungsbolzen eine Druck-Zug-Kombination, die aufgrund der angelegten Zugspannung eine wesentlich höhere Steifigkeit als ein massiver Schaft gleichen Durchmessers hat. Die Folge ist, daß für den Schaftvorderteil nur eine sehr dünnwandige Hülse verwendet werden kann, die von dem Befestigungsbolzen durchsetzt wird, der seinerseits mit einem geringen Durchmesser ausgebildet sein kann. Diese vorgespannte Baueinheit kann daher eine größere Länge haben, sodaß in tiefen Bohrungen kleinen Durchmessers gearbeitet werden kann.

Gemäß einer alternativen Ausführungsform der Erfindung weist der Schneidkopf einen mit ihm einstückig ausgebildeten oder an ihm befestigten Befestigungsbolzen auf. Hier fehlt also ein Zentralloch bzw. der Befestigungsbolzen füllt dieses Zentralloch wie beim zweitgenannten Stand der Technik aus, jedoch muß der Befestigungsbolzen nicht notwendigerweise eine Schrumpfverbindung mit dem Schneidkopf haben, sondern kann auch auf andere Weise, z.B. durch Schweißen mit ihm verbunden sein.

Das neue dieses Schneidkopfes besteht erfindungsgemäß darin, daß der Schaft in seinem Vorderteil als dünnwandige Hülse ausgebildet ist, durch die sich der Befestigungsbolzen hindurcherstreckt, welcher an seinem Hinterende eine Ringnut oder dergl. aufweist, in die Klauen einer im Schafthinterende angeordneten Zugvorrichtung eingreifen, deren Spannkraft den Befestigungsbolzen über den größten Teil seiner Länge auf Zug beansprucht, während die dünnwandige Hülse als Druckstab wirkt, und daß der Befestigungsbolzen einen Abschnitt mit einem Querschnitt in Form eines regelmäßigen konvexen Polygons hat, der zur Drehsicherung formschlüssig in einen komplementären Kanalabschnitt des Schaftes eingreift. Diese Drehsicherung befindet sich vorzugsweise am Vorderende der Schafthülse,also unmittelbar benachbart dem Schneidkopf. Auf diese Weise wird das Schneidmoment sowohl von der Hülse als auch vom Befestigungsbolzen übertragen.

Der für die Formschlußverbindung vorgesehene Querschnitt in Form eines regelmäßigen konvexen Polygons wird vorzugsweise als dreieckiges oder viereckiges Profil ausgebildet, wobei die "Ecken" natürlich gerundet sind. Die Seiten sind konvex gewölbt. Angrenzend an die Formschlußverbindung zwischen Befestigungsbolzen und Schaftvorderende weisen der Schaft und der Befestigungsbolzen zylindrische Abschnitte auf. Die zylindrische Bohrung des Schaftes liegt etwa auf dem Durchmesser des Umkreises des Polygons, während der Außendurchmesser des Befestigungsbolzens auf dem einbeschriebenen Kreis des Polygons liegt. Auf diese Weise ergeben sich bei einem Dreieck-Polygonprofil drei axiale Kammern zwischen Befestigungsbolzen und Schaft, die vorzugsweise als Kühlmittelkanäle genutzt werden. Diese Kammern könne z.B. durch eine Ringnut am Vorderende des Schaftes kommunizieren und mit einer schrägen Auslaßbohrung verbunden sein, die den Mantel des Schaftes am Schaftvorderende durchsetzt und auf die Schneidzone des Schneidkopfes hingerichtet ist.

Die Zeichnung veranschaulicht ein Ausführungsbeispiel der Erfindung.

Es zeigt
- FIG. 1: Eine Längsschnittansicht durch das neue Fräswerkzeug,
- FIG. 2: eine Stirnansicht des Fräswerkzeuges in Richtung X der FIG. 1,
- FIG. 3: eine Schnittansicht längs der Linie A-B der FIG. 1 und
- FIG. 4: eine herausgezogene Ansicht des in FIG. 1 gezeigten Zangenschiebers in geöffneter Stellung.

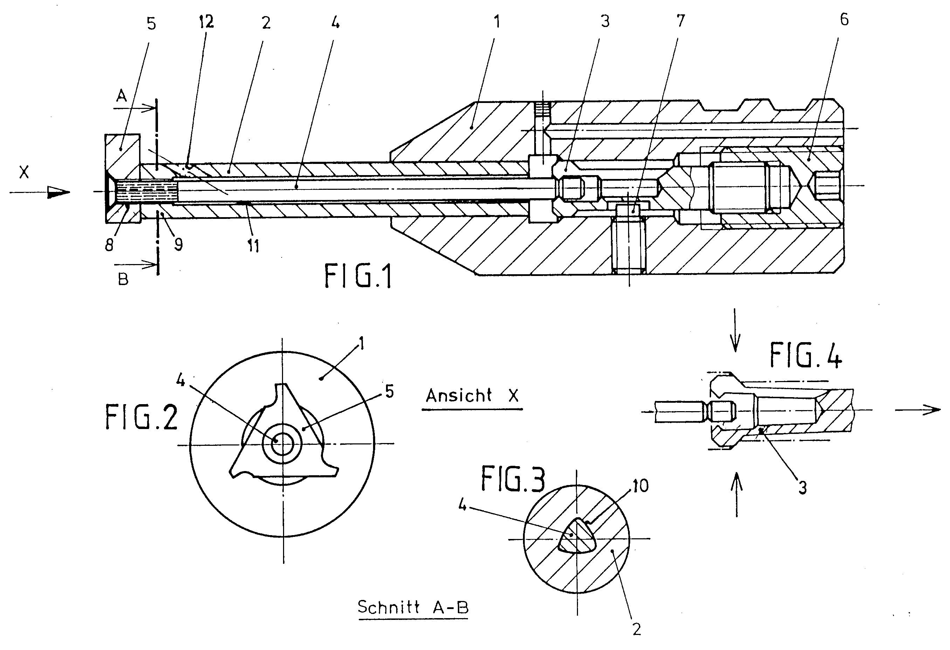

In einen zylindrischen Schaft 1 ist eine dünnwandige Hülse 2 eingesetzt und unbeweglich am Schaft 1 befestigt. Die Hülse 2 bildet den Vorderteil des Schaftes 1. In der Hülse 2 ist ein Befestigungsbolzen 4 axial beweglich gelagert, der am Hinterende eine Ringnut aufweist, in die die Klauen eines Zangenschiebers 3 eingreifen, wenn dieser von einer Zugvorrichtung 6 nach hinten gezogen wird. Diese Zugvorrichtung 6 besteht aus einem Drehkörper, der in einer zylindrischen Bohrung des Schaftes 1 drehbar gelagert ist und an seiner hinteren Stirnfläche ein Sechskant-Sackloch aufweist, um den Drehkörper mit einem entsprechenden Werkzeug drehen zu können. Der Zangenschieber 3 hat an seinem Hinterende einen Gewindebolzen, der in einer Schraubhülse relativ verschraubbar ist, welche in einer Bohrung des Drehkörpers 6 befestigt ist. Ein radialer Stift 7 durchsetzt die Wandung des Schaftes 1 und ragt in ein Langloch des Zangenschiebers 3 hinein, sodaß dieser gegen Drehung gesichert ist. Wie Fig.4 veranschaulicht, sind die Klauen des Zangenschiebers 3 radial nach außen in Offenstellung vorgespannt. Wird nun der Drehkörper 6 gedreht, zieht dieser den Zangenschieber 3 nach hinten, wodurch die drei Klauen aufgrund schräger Rampenflächen des Schaftes 1 radial nach innen bewegt und in Eingriff mit der Ringnut des Befestigungsbolzens 4 gebracht werden. Ein weiteres Drehen des Drehkörpers 6 setzt den Befestigungsbolzen 4 unter eine Zugspannung. Die Hülse 2 des Schaftes 1 wirkt dabei als Druckglied.

Am Vorderende der Hülse 2 liegt der Schneidkopf 5 an, der hier als etwa dreieckig konturierte Fräsplatte ausgebildet ist, die ein Zentralloch 8 aufweist, welches vom Befestigungsbolzen 4 durchsetzt wird, dessen vorderes Ende einen verbreiterten Kopf aufweist, der im Schneidkopf 5 versenkt ist. Der Innenquerschnitt des Vorderteils 9 der Hülse 2 hat die Form eines regelmäßigen konvexen Polygons 10 mit gerundeten Ecken und entsprechend konvex gewölbten Seitenflächen. Diese Form ist in FIG. 3 veranschaulicht. Das Sackloch 8 hat einen identischen Innenquerschnitt und der Befestigungsbolzen 4 hat in seinem kopfnahen Axialbereich, der sich über die Dicke des Schneidkopfes 5 und die axiale Länge des Schaftvorderteils 9 erstreckt,eine komplementäre Außenform zu dem regelmäßigen konvexen Polygon 10, sodaß der Schneidkopf 5 am Befestigungsbolzen 4 denselben in Umfangsrichtung wirkenden Formschluß aufweist, wie letzterer am Schaftvorderende 9. Nachdem der Befestigungsbolzen 4 durch das Zentralloch 8 des Schneidkopfes 5 gesteckt und in die Hülse 2 eingesteckt ist, ist der Schneidkopf 5 aufgrund der Formschlußverbindung drehsicher an der Hülse 2 des Schaftes 1 gelagert und kann dann - wie vorbeschrieben - durch Drehen des Drehkörpers 6 in axialer Richtung festgespannt werden.

An den polygonalen Kupplungsabschnitt des Befestigungsbolzens 4 schließt sich nach hinten ein zylindrischer Zugankerabschnitt an, dessen Durchmesser etwa auf dem in das Polygon 10 einbeschriebenen Kreis liegt. Die Hülse 2 hat einen an den vorderen Kupplungabschnitt 9 nach hinten anschließenden Kanalteil in Form einer zylindrischen Bohrung, deren Durchmesser demjenigen des Umkreises des Polygons 10 etwa entspricht. Auf diese Weise werden zwischen Befestigungsbolzen 4 und Hülse 2 drei axiale Strömungskanäle für ein Kühlmittel gebildet, die in ihren vorderen Bereichen durch eine nicht dargestellte Ringnut in der Hülse 2 miteinander kommunizieren können. Über eine schräg auf die Schneidzone hingerichtete Auslaßbohrung 12 in der Hülse 2 tritt die. Kühlflüssigkeit aus. Im Schaft 1 ist ein Kanalsystem für die Kühlmittelzufuhr in diese Axialkammern ausgebildet.

In einer nicht dargestellten alternativen Ausführungsform bestehen der Schneidkopf 5 und der Befestigungsbolzen 4 aus einem einstückigen Bauteil, dessen Verbindung nicht notwendigerweise das Zentralloch 8 mit dem beschriebenen polygonalen Querschnitt aufweisen muß. Angrenzend an die Hinterfläche des Schneidkopfes 5 weist der Befestigungsbolzen 4 jedoch die in der Zeichnung dargestellte Konfiguration auf, um eine formschlüssige, verdrehungssichere Verbindung mit dem Vorderteil 9 der Hülse 2 zu schaffen. Die restliche Gestaltung dieser Ausführungsform entspricht der vorbeschriebenen gemäß FIG. 1.

In FIG. 1 hat der Befestigungsbolzen 4 die polygonale Außenkontur in seinem an den Kopf anschließenden Axialbereich. Entsprechend ist das Zentralloch 8 nur in dem an die konische Ansenkung anschließenden Axialbereich polygonal konturiert. Es ist aber im Rahmen der Erfindung auch möglich, alternativ oder kumulativ dem Kopf des Befestigungsbolzens einen polygonalen Außenquerschnitt zu geben und die im Schneidkopf 5 vorgesehene Ansenkung des Zentralloches 8 zur Aufnahme des Kopfes des Befestigungsbolzens 4 polygonal zu konturieren, um die Formschlußverbindung zwischen Schneidkopf 5 und Befestigungsbolzen 4 allein in dessen Kopfbereich oder auch zusätzlich in den Kopfbereich zu legen.

## Patentansprüche

1. Schneidkopf zur stirnseitigen Befestigung an einem Schaft eines Fräswerkzeuges, mit einem, von einem Befestigungsbolzen zu durchsetzenden Zentralloch, der im Schaft verankerbar ist, wobei zur Drehsicherung des Schneidkopfes eine Formschlußverbindung zwischen diesem und dem Schaft besteht, dadurch gekennzeichnet, daß das Zentralloch (8) einen Abschnitt mit einem Querschnitt in Form eines regelmäßigen konvexen Polygons zur Formschlußverbindung mit dem, im Kopf und/oder im kopfnahen Axialbereich einen komplementären regelmäßigen polygonalen Querschnitt aufweisenden Befestigungsbolzen (4) hat, der den hohl ausgebildeten Schaft (1, 2) relativ undrehbar durchsetzt und an seinem Hinterende mit einer im Schaft (1) angeordneten Zugvorrichtung (6) kuppelbar ist.

2. Fräswerkzeug mit Schneidkopf nach Anspruch 1, dadurch gekennzeichnet, daß das Vorderende (9) des Schaftes (1,2) denselben Innenquerschnitt wie das Zentralloch (8) des Schneidkopfes (5) aufweist und daß der Befestigungsbolzen (4) mit seinem polygonalkonturierten Axialbereich in das Schaftvorderende (9) formschlüssig eintaucht.

3. Schneidkopf mit an ihm befestigten Befestigungsbolzen zum Einsetzen in einen Schaft eines Fräswerkzeuges, dadurch gekennzeichnet, daß der Schaft (1) in seinem Vorderteil als dünnwandige Hülse (2) ausgebildet ist, durch die sich der Befestigungsbolzen (4) hindurch erstreckt, welcher an seinem Hinterende eine Ringnut aufweist, in die Klauen einer im Schafthinterende angeordneten Zugvorrichtung (6) eingreifen, deren Spannkraft den Befestigungsbolzen (4) über den größten Teil seiner Länge auf Zug beansprucht, während die dünnwandige Hülse (2) als Druckstab wirkt, und daß der Befestigungsbolzen (4) einen Abschnitt mit einem Querschnitt in Form eines regelmäßigen konvexen Polygons (10) hat, der zur Drehsicherung formschlüssig in einen komplementären Kanalabschnitt des Schaftes (1, 2) eingreift.

4. Schneidkopf nach einem der Ansprüche 1 bis 3, dadurch gekennzeichnet, daß der Schaft (1, 2) einen zentralen Durchgangskanal aufweist, dessen kurzer Vorderabschnitt (9) eine bzw. die polygonale Innenkontur hat und daß der sich nach hinten anschließende längere Abschnitt aus einer zylindrischen Bohrung mit einem Durchmesser etwa gleich dem des geometrischen Umkreises des Polygons (10) des Vorderabschnittes (9) besteht.

5. Schneidkopf nach einem der Ansprüche 1 bis 4, dadurch gekennzeichnet, daß der Befestigungsbolzen (4) einen, an seinen vorderen polygonalen Axialbereich nach hinten anschließenden zylindrischen Abschnitt aufweist, dessen Durchmesser etwa gleich dem des geometrischen Inkreises des polygonalen Querschnittes (10) im vorderen Axialbereich ist.

6. Schneidkopf nach einem der Ansprüche 1 bis 5, dadurch gekennzeichnet, daß zwischen Befestigungsbolzen (4) und Schaft (1,2) ein oder mehrere Axialkanäle (11) für Kühlmittel gebildet sind, die ggf. über eine Ringnut im Bereich einer einzigen vorzugsweise schräg zur Schneidzone des Schneidkopfes (5) gerichteten Auslaßbohrung (12) im Schaft (1,2) nahe dessen Vorderende (9) miteinander kommunizieren.

7. Schneidkopf nach einem der Ansprüche 1 bis 6, dadurch gekennzeichnet, daß der sich zwischen Schneidkopf (5) und dem hinteren Werkzeugaufnahmeabschnitt des Schaftes (1) erstreckende Schaftteil als dünnwandige zylindrische Hülse (2) ausgebildet ist, die im hinteren Schaftabschnitt unbeweglich befestigt ist.

8. Schneidkopf nach einem der Ansprüche 1 bis 7, dadurch gekennzeichnet, daß die Vorderhälfte des Schaftes (1,2) und der Befestigungsbolzen (4) eine axial vorgespannte Druck-Zug-Kombinationseinheit bilden.

9. Schneidkopf nach einem der Ansprüche 1 bis 8, dadurch gekennzeichnet, daß das Hinterende des Befestigungsbolzens (4) eine Ringnut aufweist, in die in der Kupplungsstellung Greifklauen eines undrehbar im Schaft (1) gelagerten Zangenschiebers (3) der Zugvorrichtung (6) eingreifen.

10. Schneidkopf nach Anspruch 9, dadurch gekennzeichnet, daß die Zugvorrichtung (6) einen, vom Schafthinterende zugänglichen und mit einem Betätigungsmehrkant oder dergl. versehenen Drehkörper aufweist, in den der Zangenschieber (3) mit einem Gewindeabschnitt relativ verschraubbar eingreift.
